# EUROPÄISCHE PATENTSCHRIFT

(11) **EP 2 333 289 B1**
(45) Veröffentlichungstag und Bekanntmachung des Hinweises auf die Patenterteilung: **20.08.2014**
(21) Anmeldenummer: 10193473.5
(22) Anmeldetag: 02.12.2010
(51) Int. Cl.: F02M 25/07, F02B 29/08, F02D 9/02, F02D 9/04

(54) **Brennkraftmaschinensystem und zugehöriges Betriebsverfahren**
Internal combustion engine system and corresponding method of operating
Système moteurs à combustion interne et procédé de fonctionnnement associé

(30) Priorität: 12.12.2009 DE 102009058130
(43) Veröffentlichungstag der Anmeldung: 15.06.2011
(73) Patentinhaber: MAHLE International GmbH, 70376 Stuttgart (DE)
(72) Erfinder: Elsässer, Alfred, 75210, Keltern (DE)
(74) Vertreter: BRP Renaud & Partner

(56) Entgegenhaltungen:
- EP-A2- 1 712 760
- WO-A1-2008/145503
- DE-A1-102007 003 116

## Beschreibung

Die vorliegende Erfindung betrifft ein Brennkraftmaschinensystem, insbesondere eines Kraftfahrzeugs, mit den Merkmalen des Oberbegriffs des Anspruchs 1 sowie ein zugehöriges Betriebsverfahren mit den Merkmalen des Oberbegriffs des Anspruchs 4.

Ein übliches Brennkraftmaschinensystem umfasst eine Brennkraftmaschine, insbesondere einen Kolbenmotor, eine Frischluftanlage zum Zuführen von Frischluft zur Brennkraftmaschine, eine Abgasanlage zum Abführen von Abgas von der Brennkraftmaschine sowie eine Abgasrückführanlage zum Rückführen von Abgas von der Abgasanlage zur Frischluftanlage. Treibende Kraft für die Abgasrückführung ist ein Druckgefälle zwischen einer Entnahmestelle, über die Abgas von einer Abgasleitung in eine Rückführleitung eintritt, und einer Einleitstelle, über die das rückgeführte Abgas von der Rückführleitung in eine Frischluftleitung eintritt. Um den in die Rückführleitung eintretenden Entnahmestrom steuern zu können, kann die Abgasrückführanlage mit einer Abgasventileinrichtung ausgestattet sein. Eine derartige Abgasventileinrichtung kann grundsätzlich in der Abgasleitung stromab der Entnahmestelle angeordnet sein, um durch Reduzieren des durchströmbaren Querschnitts einen Aufstäu in der Abgasströmung zu erzeugen, der den Druck im Abgas stromauf der Abgasventileinrichtung erhöht. In der Folge erhöht sich die Druckdifferenz zwischen Entnahmestelle und Einleitstelle, was die rückführbare Abgasmenge erhöht. Dabei ist es üblich, eine gewünschte Rückführströmung bzw. Rückführrate mit Hilfe der als Stauklappe arbeitenden Abgasventileinrichtung stationär einzustellen, indem die Abgasventileinrichtung bleibend, also stationär in eine Stellung überführt wird, die zur gewünschten Abgasrückführrate führt. Sobald eine andere Abgasrückführrate erwünscht ist, wird die Abgasventileinrichtung entsprechend in eine andere Stellung überführt, die sie dann wieder stationär einnimmt und die zur gewünschten AGR-Rate führt.

Aus der DE 10 2007 003 116 A1 und aus der WO 2008/145503 A1 sind jeweils ein Brennkraftmaschinensystem, insbesondere eines Kraftfahrzeugs, sowie ein zugehöriges Betriebsverfahren bekannt. Das bekannte Brennkraftmaschinensystem umfasst eine Brennkraftmaschine, eine Frischluftanlage zum Zuführen von Frischluft zur Brennkraftmaschine, eine Abgasanlage zum Abführen von Abgas von der Brennkraftmaschine und eine Abgasrückführanlage zum Rückführen von Abgas von der Abgasanlage zur Frischluftanlage, wobei die Abgasrückführanlage eine Abgasventileinrichtung aufweist, mit der ein von einer Abgasleitung der Abgasanlage an einer Entnahmestelle in eine Rückführleitung der Abgasrückführanlage eintretender Entnahmestrom steuerbar ist, wobei die Abgasrückführanlage eine Frischluftventileinrichtung aufweist, mit der ein von der Rückführleitung an einer Einleitstelle in eine Frischluftleitung der Frischluftanlage eintretender Einleitstrom steuerbar ist, wobei die Abgasventileinrichtung zum Erzeugen des Entnahmestroms permanent zwischen einer den Druck in der Abgasleitung an der Entnahmestelle gegenüber einem Ausgangsabgasdruck erhöhenden ersten Stellung und einer den Druck in der Abgasleitung an der Entnahmestelle auf den Ausgangsabgasdruck senkenden zweiten Stellung verstellbar ist, so dass positive Druckpulse mit gegenüber dem Ausgangsabgasdruck erhöhtem Druck aufeinanderfolgen, wobei die Frischluftventileinrichtung zum Erzeugen des Einleitstroms permanent zwischen einer dem Druck in der Frischluftleitung an der Einleitstelle gegenüber einem Ausgangsfrischluftdruck senkenden ersten Stellung und einer den Druck in der Frischluftleitung an der Einleitstelle auf den Ausgangsfrischluftdruck erhöhend in zweiten Stellung verstellbar ist, so dass negative Druckpulse mit gegenüber dem Ausgangsfrischluftdruck abgesendeten Druck aufeinanderfolgen. Beim zugehörigen Verfahren werden im Bereich der Entnahmestelle Druckpulsationen im Abgas erzeugt, bei denen positive Druckpulse aufeinanderfolgen, die einen gegenüber einem Ausgangsabgasdruck erhöhten Druck aufweisen, wobei im Bereich der Einleitstelle Druckpulsationen in der Frischluft erzeugt werden, bei denen negative Druckpulse aufeinanderfolgen, die einen gegenüber einem Ausgangsfrischluftdruck reduzierten Druck aufweisen. Bei den bekannten Systemen sind die Abgasventileinrichtungen und die Frischluftventileinrichtungen jeweils als Sperrventile ausgestaltet, um die Druckpulse durch abwechselndes Öffnen und Sperren der Abgasleitung bzw. der Frischluftleitung zu erzeugen.

Die vorliegende Erfindung beschäftigt sich mit dem Problem, für ein Brennkraftmaschinensystem bzw. für ein zugehöriges Betriebsverfahren eine verbesserte Ausführungsform anzugeben, die sich insbesondere durch einen erhöhten Wirkungsgrad auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, zusätzlich zur abgasseitig angeordneten Abgasventileinrichtung eine frischluftseitig angeordnete Frischluftventileinrichtung vorzusehen, mit deren Hilfe der über die Einleitstelle in die Frischluftleitung eintretende Einleitstrom steuerbar ist. Durch Reduzieren des durchströmbaren Querschnitts der Frischluftleitung stromauf der Einleitstelle kann der Druck stromab der Frischluftventileinrichtung abgesenkt werden, was die Druckdifferenz zwischen Entnahmestelle und Einleitstelle erhöht. Zusätzlich schlägt die Erfindung vor, die Abgasventileinrichtung und die Frischluftventileinrichtung nicht stationär, sondern dynamisch zu betreiben, und zwar derart, dass die jeweilige Ventileinrichtung permanent z.B. zwischen einer Schließstellung und einer Offenstellung verstellt wird. Durch das abwechselnde Öffnen und Schließen der jeweiligen Leitung entstehen auf der Abgasseite positive Druckpulse mit gegenüber einem Ausgangsabgasdruck erhöhten Druck, während gleichzeitig auf der Frischluftseite negative Druckpulse mit gegenüber einem Ausgangsfrischluftdruck abgesenktem Druck entstehen. Die beiden Ventileinrichtungen werden außerdem gezielt so synchronisiert, dass die im Bereich der Entnahmestelle erzeugten positiven Druckpulse über die Rückführleitung auf die im Bereich der Einleitstelle erzeugten negativen Druckpulse treffen. Mit anderen Worten, ein positiver Druckpuls, der von der Abgasseite über die Rückführleitung zur Frischluftseite übertragen wird, trifft auf der Frischluftseite genau auf einen negativen Druckpuls. Dies hat zur Folge, dass an der Frischluftseite der Druck weitgehend konstant bleibt, da der Druckabfall aufgrund der negativen Druckpulse stets durch die rechtzeitig eintreffenden positiven Druckpulse des rückgeführten Abgases mehr oder weniger ausgeglichen werden. Dies führt zu reduzierten Druckschwankungen auf der Frischluftseite stromab der Einleitstelle. Insgesamt kann somit der Druck frischluftseitig stabilisiert werden, was sich vorteilhaft für die Effizienz bzw. das Betriebsverhalten der Brennkraftmaschine auswirkt.

Von besonderer Bedeutung ist diese Vorgehensweise bzw. dieser Aufbau bei einer aufgeladenen Brennkraftmaschine in Verbindung mit einer Niederdruckabgasrückführung. Bei einer derartigen ND-Abgasrückführung oder ND-AGR befindet sich die Einleitstelle stromauf eines Verdichters eines Abgasturboladers. Durch die hier vorgeschlagene Abgasrückführung erhält der Verdichter einen hinsichtlich des Drucks stabilisierten Zustrom, wodurch ein Verdichterrad gleichmäßiger belastet wird und eine höhere Effizienz aufweist. Dies wirkt sich über eine gemeinsame Antriebswelle auch auf die Turbine des Abgasturboladers aus, wodurch auch diese geringeren Belastungen bzw. Belastungsschwankungen ausgesetzt ist.

Zweckmäßig erfolgt dabei die Synchronisation der Ventileinrichtungen zum Erreichen eines möglichst "glatten" Druckverlaufs vor dem Verdichter und zur Erzeugung eines möglichst großen AGR-Massenstroms unter der Randbedingung, dass der Druckverlust aus Verbrauchsgründen soweit wie möglich zu verringern ist.

Erfindungsgemäß ist vorgesehen, die positiven Druckpulse durch abwechselndes Umleiten zumindest eines Teils der Abgasströmung von der Abgasleitung in die Rückführleitung zu erzeugen. Die Abgasventileinrichtung arbeitet dann als 3/2-Wegeventil. Ferner ist erfindungsgemäß vorgesehen, die negativen Druckpulse durch abwechselndes Ersetzen zumindest eines Teils der Frischluftströmung in der Frischluftleitung durch rückgeführtes Abgas zu erzeugen. In diesem Fall arbeitet die Frischluftventileinrichtung als 3/2-Wegeventil. Bei einer derartigen Vorgehensweise lassen sich quasi beliebige Abgasrückführmengen einstellen. Insbesondere ist es möglich, auf eine zusätzliche Ventileinrichtung in der Rückführleitung zu verzichten, da die AGR-Rate auch auf den Wert Null eingestellt werden kann. Ebenso ist es bei einer derartigen Ausführungsform möglich, das gesamte Abgas von der Abgasseite über die Rückführleitung auf die Frischluftseite zu überführen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine stark vereinfachte, schaltplanartige Prinzipdarstellung eines Brennkraftmaschinensystems,
- Fig. 2: verschiedene Diagramme a-c zur Veranschaulichung von Druckverläufen,
- Fig. 3 und 4: Ansichten wie in Fig. 1 im Bereich einer Abgasrückführanlage, bei verschiedenen Ausführungsformen,
- Fig. 5: eine stark vereinfachte, teilweise geschnittene, perspektivische Ansicht einer Frischluftventileinrichtung.

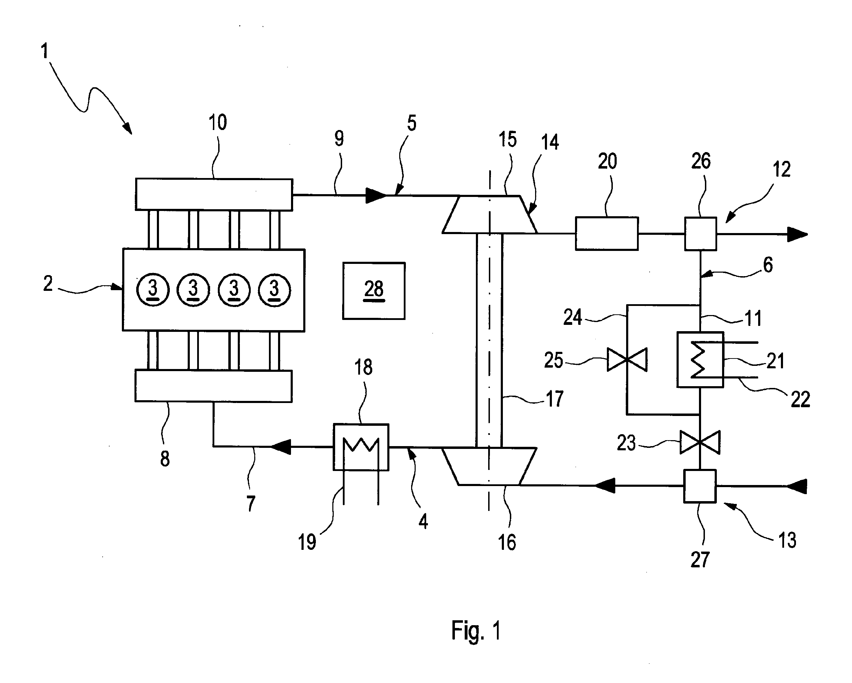

Entsprechend Fig. 1 umfasst ein Brennkraftmaschinensystem 1, das bevorzugt in einem Kraftfahrzeug zur Anwendung kommen kann, eine Brennkraftmaschine 2, bei der es sich bevorzugt um einen Kolbenmotor mit Zylindern 3 handeln kann. Das Brennkraftmaschinensystem 1 weist ferner eine Frischluftanlage 4, eine Abgasanlage 5 und eine Abgasrückführanlage 6 auf. Die Frischluftanlage 4 dient zum Zuführen von Frischluft zur Brennkraftmaschine 2 und weist eine Frischluftleitung 7 sowie einen Frischluftverteiler 8 auf, der die von der Frischluftleitung zugeführte Frischluft auf die einzelnen Zylinder 3 verteilt. Die Abgasanlage 5 dient zum Abführen von Abgas von der Brennkraftmaschine 2 und weist hierzu eine Abgasleitung 9 auf, die an einen Abgassammler 10 angeschlossen ist, der das von den Zylindern 3 kommende Abgas zusammenführt und der Abgasleitung 9 zuführt. Die Abgasrückführanlage 6 weist eine Abgasrückführleitung 11 auf. Die Abgasrückführanlage 6 dient zum Rückführen von Abgas von der Abgasanlage 5 zur Frischluftanlage 4. Hierzu ist die Rückführleitung 11 über eine Entnahmestelle 12 an die Abgasleitung 9 angeschlossen, wodurch Abgas von der Abgasanlage 5 in die Rückführleitung 11 eintreten kann. Ferner ist die Rückführleitung 11 über eine Einleitstelle 13 an die Frischluftleitung 7 angeschlossen, wodurch das rückgeführte Abgas in die Frischluftanlage 4 eintreten kann.

Im gezeigten Beispiel ist außerdem ein Abgasturbolader 14 vorgesehen, dessen Turbine 15 in der Abgasleitung 9 angeordnet ist und dessen Verdichter 16 in der Frischluftleitung 7 angeordnet ist. Turbine 15 und Verdichter 16 bzw. ein nicht gezeigtes Turbinenrad und ein nicht gezeigtes Verdichterrad stehen über eine gemeinsame Antriebswelle 17 miteinander in Verbindung. In der Frischluftleitung 7 ist stromab des Verdichters 16 ein Ladeluftkühler 18 angeordnet, der an einen Kühlkreis 19 angeschlossen ist, bei dem es sich um den Kühlkreis der Brennkraftmaschine 2 handeln kann. Stromab der Turbine 15 und stromauf der Entnahmestelle 12 ist in der Abgasleitung 9 ein Partikelfilter 20 angeordnet.

Ferner kann die Abgasrückführanlage 6 einen Abgasrückführkühler 21 aufweisen, der an einen Kühlkreis 22 angeschlossen sein kann, bei dem es sich ebenfalls um den Kühlkreis der Brennkraftmaschine 2 handeln kann. Der Abgasrückführkühler 21 ist dabei in der Rückführleitung 11 angeordnet. Ferner enthält die Rückführleitung 11 ein Abgasrückführventil 23 zur Steuerung einer Abgasrückführrate bzw. zum Sperren der Rückführleitung 11. Im Beispiel ist das Abgasrückführventil 23 stromab des Abgasrückführkühlers 21 in der Rückführleitung 11 angeordnet. Im Beispiel ist außerdem ein Bypass 24 zur Umgehung des Abgasrückführkühlers 21 vorgesehen, der mit Hilfe eines Bypassventils 25 steuerbar ist. Insbesondere bei einem Kaltstart der Brennkraftmaschine 1 kann es erforderlich sein, Abgas ungekühlt rückzuführen, um die Brennkraftmaschine 2 rascher auf Betriebstemperatur zu bringen.

Die Abgasrückführanlage 6 umfasst ferner eine Abgasventileinrichtung 26 und eine Frischluftventileinrichtung 27. Die Abgasventileinrichtung 26 ist abgasseitig im Bereich der Entnahmestelle 12 angeordnet und so ausgestaltet, dass damit ein von der Abgasleitung 9 in die Rückführleitung 11 eintretender Entnahmestrom gesteuert werden kann. Im Unterschied dazu ist die Frischluftventileinrichtung 27 so ausgestaltet, dass damit ein von der Rückführleitung 11 in die Frischluftleitung 7 eintretender Einleitstrom steuerbar ist.

Beide Ventileinrichtungen 26, 27 sind permanent zwischen einer ersten Stellung und einer zweiten Stellung verstellbar. Sie können insbesondere als schnellschaltende Ventileinrichtungen ausgestaltet sein, die innerhalb kurzer Schaltzeiten, die kleiner als 10 ms sein können und die insbesondere im Bereich der Schaltzeiten von Ladungswechselventilen der Brennkraftmaschine 2 liegen können, ein Umschalten zwischen den Schaltstellungen oder Schaltzuständen ermöglichen. Dies ermöglicht insbesondere eine Synchronisation mit der Drehzahl der Brennkraftmaschine 2, was jedoch nicht zwingend der Fall sein muss.

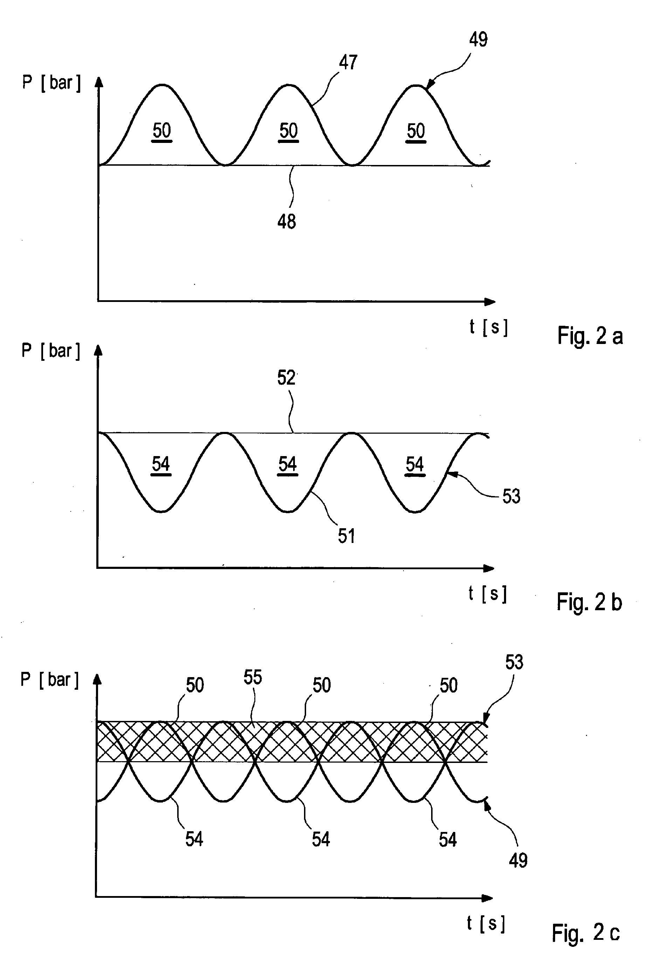

Dementsprechend ist die Abgasventileinrichtung 26 entsprechend Fig. 2a so ausgestaltet, dass sie zum Erzeugen des Entnahmestroms permanent zwischen einer ersten Stellung und einer zweiten Stellung verstellbar ist. Die erste Stellung ist dabei so konzipiert, dass sich durch die erste Stellung ein Druck 47 in der Abgasleitung 9 an der Entnahmestelle 12 gegenüber einem Ausgangsabgasdruck 48 erhöht. Im Unterschied dazu ist die zweite Stellung so konzipiert, dass sich der Druck 47 in der Abgasleitung 9 an der Entnahmestelle 12 wieder auf den Ausgangsabgasdruck 48 absenkt. Somit kann die Abgasventileinrichtung 26 einen gepulsten Entnahmestrom 49 erzeugen, bei dem einzelne positive Druckpulse 50 mit gegenüber dem Ausgangsabgasdruck 48 erhöhtem Druck zeitlich beabstandet aufeinander folgen. Die erste Stellung kann einer Schließstellung oder einer Teilbehinderungsstellung entsprechen, während die zweite Stellung einer Offenstellung entspricht.

Analog dazu ist die Frischluftventileinrichtung 27 gemäß Fig. 2b so ausgestaltet, dass sie zum Erzeugen des Einleitstroms permanent zwischen einer ersten Stellung und einer zweiten Stellung verstellbar ist, wobei in diesem Fall in der ersten Stellung ein Druck 51 in der Frischluftleitung 7 an der Einleitstelle 13 gegenüber einem Ausgangsfrischluftdruck sinkt, während er in der zweiten Stellung an der Einleitstelle 13 wieder auf den Ausgangsfrischluftdruck 52 ansteigt. Dementsprechend kann die Frischluftventileinrichtung 27 einen gepulsten Einleitstrom 53 erzeugen, bei dem einzelne negative Druckpulse 54 mit gegenüber dem Ausgangsfrischluftdruck 52 abgesenktem Druck zeitlich beabstandet aufeinanderfolgen. Die erste Stellung kann einer Schließstellung oder einer Teilbehinderungsstellung entsprechen, während die zweite Stellung einer Offenstellung entspricht.

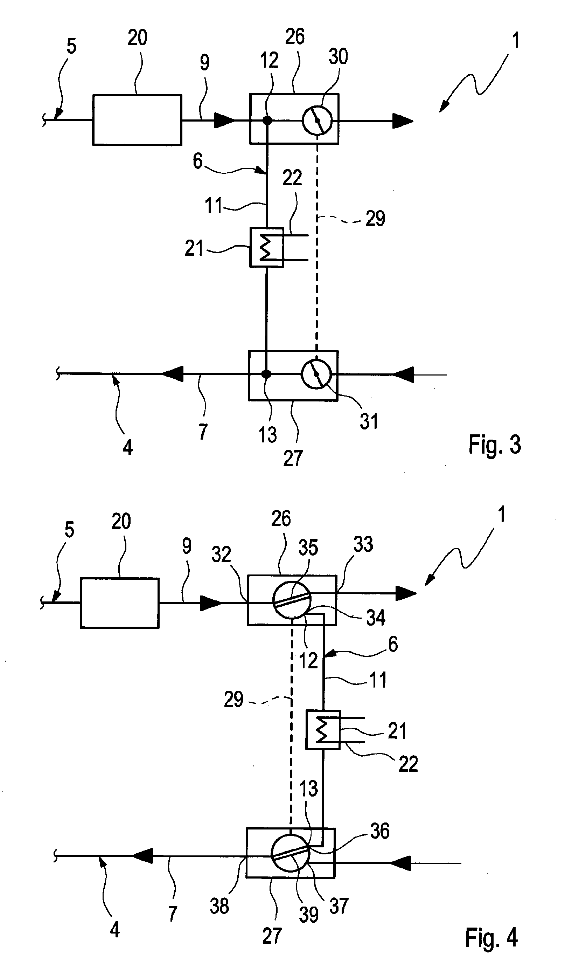

Die Ventileinrichtungen 26, 27 können mit Hilfe einer in Fig. 1 angedeuteten Steuereinrichtung 28 betätigt werden, die auf geeignete Weise mit den Ventileinrichtungen 26, 27 gekoppelt ist. Diese Steuereinrichtung 28 kann entsprechend Fig. 2c die Ventileinrichtungen 26, 27 hinsichtlich ihrer Betätigungen synchronisieren, um eine zeitliche Phasenlage der gepulsten Entnahmeströmung 49 auf die gepulste Einleitströmung 53 abzustimmen. Anstelle einer derartigen elektronischen Synchronisation über die Steuereinrichtung 28 ist grundsätzlich auch eine mechanische Kopplung zwischen den Ventileinrichtungen 26, 27 vorstellbar, die ebenfalls zur gewünschten Synchronisation führt. Eine entsprechende Synchronisationskopplung ist in den Fig. 2 und 3 durch eine unterbrochene Linie angedeutet und mit 29 bezeichnet.

Jedenfalls sind die Ventileinrichtungen 26, 27 gemäß Fig. 2c derart synchronisiert, dass die an der Entnahmestelle 12 in die Rückführleitung 11 eintretenden positiven Druckpulse 50 an der Einleitstelle 13 auf die negativen Druckpulse 54 treffen. Die Synchronisation erfolgt dabei so, dass im Bereich der Einleitstelle 13 der durch die negativen Druckpulse 54 erzeugte frischluftseitige Druckabfall mehr oder weniger durch die eingeleiteten positiven Druckpulse 50 ausgeglichen wird. Es stellt sich ein Druckband 55 mit reduzierten Druckschwankungen ein. In der Folge können die Druckschwankungen auf der Frischluftseite erheblich reduziert werden. Dies führt insbesondere zu einer reduzierten Belastung durch eine gleichmäßigere Anströmung des Verdichters 16.

Bei der in Fig. 3 gezeigten Ausführungsform ist die Abgasventileinrichtung 26 als Sperrventil ausgestaltet, dessen Ventilglied 30 stromab der Entnahmestelle 12 den durchströmbaren Querschnitt der Abgasleitung 9 in der ersten Stellung reduziert oder sperrt und in der zweiten Stellung freigibt. Beispielsweise kann es sich beim Ventilglied 30 um eine Klappe, insbesondere um eine Schmetterlingsklappe, handeln, die im durchströmbaren Querschnitt der Abgasleitung 9 rotiert. Entsprechend dazu kann es sich bei der Frischluftventileinrichtung 27 ebenfalls um ein Sperrventil handeln, dessen Ventilglied 31, insbesondere eine Klappe, vorzugsweise eine Schmetterlingsklappe, stromauf der Einleitstelle 13 in der Frischluftleitung 7 angeordnet ist und das in der ersten Stellung den durchströmbaren Querschnitt der Frischluftleitung 7 reduziert oder sperrt und das in der zweiten Stellung den durchströmbaren Querschnitt der Frischluftleitung 7 freigibt. Bei der in Fig. 3 gezeigten Ausführungsform können somit die abgasseitigen positiven Druckpulse durch wechselweises Öffnen und Reduzieren oder Sperren des durchströmbaren Querschnitts der Abgasleitung 9 erzeugt werden. Die Abgasventileinrichtung 26 erzeugt hierzu entsprechende kurzzeitige Aufstauungen in der Abgasleitung 9. Analog dazu werden die negativen Druckpulse frischluftseitig durch abwechselndes Reduzieren oder Sperren und Öffnen der Frischluftleitung 7 erzeugt. Die Frischluftventileinrichtung 27 erzeugt hierdurch entsprechend kurzzeitige Druckabsenkungen in der Frischluftleitung 7. Hierdurch lassen sich abgasseitig und frischluftseitig direkt Druckpulsationen in der Abgasleitung 9 bzw. in der Frischgasleitung 7 erzeugen.

Bei der in Fig. 4 gezeigten erfindungsgemäßen Ausführungsform ist die Abgasventileinrichtung 26 als 3/2-Wegeventil ausgestaltet. Sie besitzt dementsprechend drei Anschlüsse und zumindest zwei Schaltstellungen. Die drei Anschlüsse sind ein Abgaseinlass 32, ein Abgasauslass 33 und ein Rückführauslass 34, der gleichzeitig die Entnahmestelle 12 bildet. Die Abgasleitung 9 ist an den Abgaseinlass 32 und an den Abgasauslass 33 angeschlossen, während die Rückführleitung 11 an den Rückführauslass 34 angeschlossen ist. Ein Ventilglied 35 verbindet in der zweiten Stellung den Abgaseinlass 32 mit dem Abgasauslass 33 und sperrt den Rückführauslass 34. In der ersten Stellung verbindet das Ventilglied 35 den Abgaseinlass 32 mit dem Rückführauslass 34 und reduziert oder sperrt den Abgasauslass 33. Grundsätzlich ist denkbar, dass die Abgasventileinrichtung 26 in der ersten Stellung den Abgasauslass 33 vollständig sperrt. Dabei können noch zusätzlich beliebige, insbesondere hinsichtlich des Öffnungsgrades vorgegebene oder feste, Zwischenstellungen möglich sein, in denen ein mehr oder weniger großer Teilstrom an Abgas auf die Rückführleitung 11 umgeleitet wird und der entsprechende Reststrom dem Abgasauslass 33 zugeführt wird.

Erfindungsgemäß ist auch die Frischluftventileinrichtung 27 als 3/2-Wegeventil ausgestaltet, das drei Anschlüsse und zumindest zwei Stellungen aufweist. Die drei Anschlüsse sind ein Rückführeinlass 36, der hier gleichzeitig die Einleitstelle 13 bildet, ein Frischlufteinlass 37 und ein Frischluftauslass 38. Die Rückführleitung 11 ist an den Rückführeinlass 36 angeschlossen. Die Frischluftleitung 7 ist an den Frischlufteinlass 37 und an den Frischluftauslass 38 angeschlossen. Ein Ventilglied 39 ermöglicht wieder eine Kopplung des Frischluftauslasses 38 entweder mit dem Rückführeinlass 36 oder mit dem Frischlufteinlass 37 oder aber quasi beliebige Zwischenstellungen mit einer Aufteilung, wobei ein erster Anteil der aus dem Frischluftauslass 38 austretenden Gasströmung durch das rückgeführte Abgas gebildet ist, während der Rest durch Frischluft gebildet ist. Dementsprechend kann die Frischluftventileinrichtung 27 in der ersten Stellung den mit der Frischluftleitung 7 verbundenen Frischlufteinlass 37 reduzieren oder sperren, und den mit der Rückführleitung 11 verbundenen Rückführeinlass 36 öffnen. In der zweiten Stellung öffnet die Frischluftventileinrichtung 27 den Frischlufteinlass 37 und sperrt den Rückführeinlass 36.

Bei der in Fig. 4 gezeigten Ausführungsform erzeugt die Abgasventileinrichtung 26 die positiven Druckpulse durch abwechselndes Umleiten zumindest eines Teils der Abgasströmung von der Abgasleitung 9 in die Rückführleitung 11. Durch dieses abwechselnde, kurzzeitige und vorübergehende Umleiten entstehen im Abgasdruck Pulsationen, welche zur gepulsten Einleitströmung führen. Dementsprechend können die Frischluftventileinrichtung 27 die negativen Druckpulse durch abwechselndes Ersetzen zumindest eines Teils der Frischluftströmung in der Frischluftleitung 7 durch rückgeführtes Abgas erzeugen. Durch dieses kurzzeitige und vorübergehende Ersetzen zumindest eines Teils der Frischluftströmung wird in der Frischluft eine Druckpulsation erzeugt, die zur gewünschten gepulsten / quasi konstanten Einleitströmung bestehend aus Frischluft- und Abgas-"Paketen" führt.

Die Synchronisation zwischen den beiden Ventileinrichtungen 26, 27 berücksichtigt insbesondere die Lauflänge der Druckpulsationen in der Rückführleitung 11, um von der Entnahmestelle 12 zur Einleitstelle 13 zu gelangen. Darüber hinaus kann die Synchronisation auch die Charakteristik der Querschnittsfreigabe bzw. Querschnittsperrung im Bereich der Entnahmestelle 12 und/oder im Bereich der Einleitstelle 13 berücksichtigen. Dabei ist eine Entkopplung der Ventildrehzahl / Schaltfrequenz von der Motordrehzahl möglich, d. h. die Abstimmung kann auf die Schwingrohreffekte in der AGR-Leitung erfolgen.

Die Ventileinrichtungen 26, 27 der Fig. 3 und 4 können dabei als Schaltventile ausgestaltet sein, deren Ventilglieder 30, 31 bzw. 35, 39 zwischen Endstellungen umschaltbar sind, welche die erste Stellung und die zweite Stellung bilden. Alternativ können die Endstellungen der Ventilglieder 30, 31, 35, 39 eine bestimmte Teilöffnung/Teilbehinderung darstellen. Alternativ ist es ebenso möglich, die Ventileinrichtungen 26, 27 als Rotationsventile auszugestalten, deren Ventilglieder 30, 31 bzw. 35, 39 Schließphasen, welche die erste Stellung bilden, und Offenphasen, welche die zweite Stellung bilden, durchlaufen. Ebenso sind Kombinationen denkbar, bei denen die eine Ventileinrichtung 26, 27 als Schaltventil ausgestaltet ist, während die andere Ventileinrichtung 26, 27 als Rotationsventil ausgestaltet ist.

Die Darstellungen der Ventileinrichtungen 26, 27 bzw. deren Ventilglieder 30, 31 bzw. 35, 39 in den Fig. 3 und 4 sind rein beispielhaft und eher funktionell als konstruktiv zu verstehen.

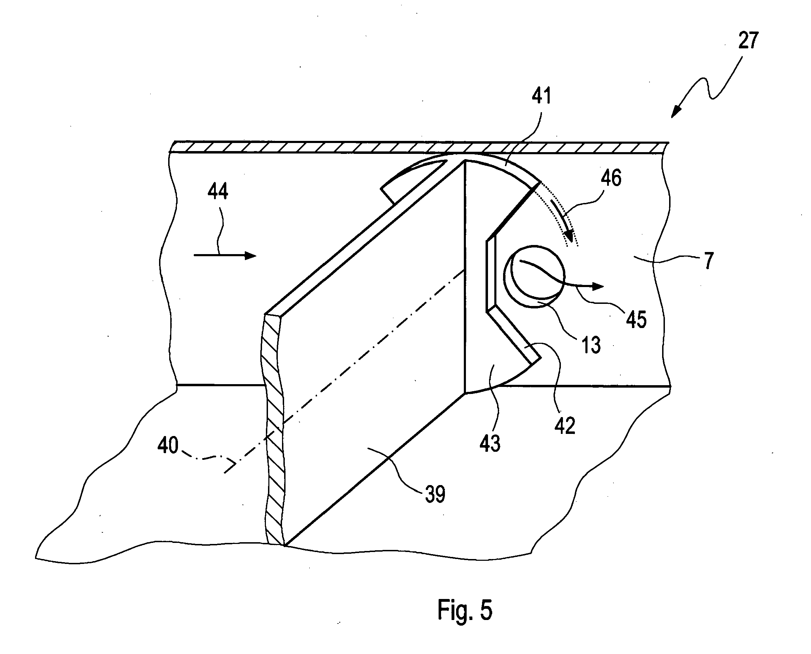

Entsprechend Fig. 5 kann eine beispielhafte Ausführungsform der Frischluftventileinrichtung 27, die als Rotationsventil ausgestaltet ist, ein klappenförmiges Ventilglied 39 aufweisen, das in einem Querschnitt der Frischluftleitung 7 um eine Rotationsachse 40 drehend verstellbar ist. Durch die Rotation des Ventilglieds 39 wird dabei der durchströmbare Querschnitt der Frischluftleitung 7 abhängig von der Drehlage des Ventilglieds 39 gesperrt oder mehr oder weniger geöffnet. Bei dieser Ausführungsform ist die Einleitstelle 13 in der Nähe des Ventilglieds 39 angeordnet, derart, dass eine stirnseitige an dem Ventilglied 39 ausgebildete Steuerscheibe 41 den durchströmbaren Querschnitt der Einleitstelle 13 steuern kann. Die Steuerscheibe 41 besitzt zumindest eine randseitige Aussparung 42, die, wenn sie die Einleitstelle 13 überfährt, die Einleitstelle 13 freigibt. Ferner besitzt die Steuerscheibe 41 zumindest einen Schließabschnitt 43, der die Einleitstelle 13 sperrt, wenn er sie überfährt. Durch eine entsprechende Positionierung und Abstimmung der Steuerscheibe 41 bezüglich des Ventilglieds 39 kann die Entnahmestelle 13 stets dann geöffnet werden, wenn der durchströmbare Querschnitt der Frischluftleitung 7 mehr oder weniger gesperrt ist. In Fig. 5 ist eine Frischgasströmung durch einen Pfeil 44 angedeutet. Eine Abgasrückführströmung bzw. ein Einleitstrom ist durch einen Pfeil 45 angedeutet. Die Rotation des Ventilglieds 39 bzw. der Steuerscheibe 41 ist durch einen Pfeil 46 angedeutet. Die Abgasventileinrichtung 26 kann grundsätzlich einen entsprechenden Aufbau aufweisen.

Entsprechend einer besonders vorteilhaften Ausführungsform kann die Steuereinrichtung 28 so konfiguriert sein, dass sie bei Bedarf die Ventileinrichtungen 26, 27 deaktivieren kann, und zwar in einer Ruhestellung, in welcher einerseits die Rückführleitung 11 gesperrt und andererseits die Abgasleitung 9 und die Frischluftleitung 7 (vollständig) geöffnet sind. Eine derartige Deaktivierung der Ventileinrichtungen 26, 27 kann für bestimmte Betriebszustände der Brennkraftmaschine 2 erforderlich sein. Beispielsweise kann bei einem Volllastbetrieb der Brennkraftmaschine 2 eine Abgasrückführung unerwünscht sein, um die Brennkraftmaschine 2 mit möglichst viel Frischluft versorgen zu können. Auch können im Transientenbetrieb der Brennkraftmaschine 2 Betriebszustände auftreten, die einen erhöhten Leistungsbedarf zeigen und dadurch mehr Frischluft und weniger bzw. kein rückgeführtes Abgas benötigen. Auch können Abgasnachbehandlungssysteme, welche die Abgasanlage 5 aufweisen kann, Betriebszustände besitzen, die möglichst viel Abgas und/oder besonders hohe Temperaturen erfordern, wodurch eine Abgasrückführung nachteilig sein kann. Derartige Betriebszustände der Abgasanlage 5 können beispielsweise beim Regenerieren einzelner Abgasbehandlungseinrichtungen, wie z. B. Partikelfilter und Speicherkatalysatoren, auftreten.

## Patentansprüche

1. Brennkraftmaschinensystem, insbesondere eines Kraftfahrzeugs,
- mit einer Brennkraftmaschine (2),
- mit einer Frischluftanlage (4) zum Zuführen von Frischluft zur Brennkraftmaschine (2),
- mit einer Abgasanlage (5) zum Abführen von Abgas von der Brennkraftmaschine (2),
- mit einer Abgasrückführanlage (6) zum Rückführen von Abgas von der Abgasanlage (5) zur Frischluftanlage (4),
- wobei die Abgasrückführanlage (6) eine Abgasventileinrichtung (26) aufweist, mit der ein von einer Abgasleitung (9) der Abgasanlage (5) an einer Entnahmestelle (12) in eine Rückführleitung (11) der Abgasrückführanlage (6) eintretender Entnahmestrom steuerbar ist,
- wobei die Abgasrückführanlage (6) eine Frischluftventileinrichtung (27) aufweist, mit der ein von der Rückführleitung (11) an einer Einleitstelle (13) in eine Frischluftleitung (7) der Frischluftanlage (4) eintretender Einleitstrom steuerbar ist,
- wobei die Abgasventileinrichtung (26) zum Erzeugen des Entnahmestroms permanent zwischen einer den Druck in der Abgasleitung (9) an der Entnahmestelle (12) gegenüber einem Ausgangsabgasdruck erhöhenden ersten Stellung und einer den Druck in der Abgasleitung (9) an der Entnahmestelle (12) auf den Ausgangsabgasdruck senkenden zweiten Stellung verstellbar ist, so dass positive Druckpulse mit gegenüber dem Ausgangsabgasdruck erhöhtem Druck aufeinanderfolgen,
- wobei die Frischluftventileinrichtung (27) zum Erzeugen des Einleitstroms permanent zwischen einer dem Druck in der Frischluftleitung (7) an der Einleitstelle (13) gegenüber einem Ausgangsfrischluftdruck senkenden ersten Stellung und einer den Druck in der Frischluftleitung (7) an der Einleitstelle (13) auf den Ausgangsfrischluftdruck erhöhend in zweiten Stellung verstellbar ist, so dass negative Druckpulse mit gegenüber dem Ausgangsfrischluftdruck abgesendeten Druck aufeinanderfolgen,
**dadurch gekennzeichnet,**
- **dass** die Ventileinrichtungen (26, 27) so synchronisiert sind, dass die an der Entnahmestelle (12) in die Rückführleitung (11) eintretenden positiven Druckpulse an der Einleitstelle (13) auf die negativen Druckpulse treffen,
- **dass** die Abgasventileinrichtung (26) als 3/2-Wegeventil ausgestaltet ist, das in der ersten Stellung einen mit der Rückführleitung (11) verbundenen Rückführauslass (34) öffnet und einen mit der Abgasleitung (9) verbundenen Abgasauslass (33) reduziert oder sperrt und das in der zweiten Stellung den Rückführ-auslass (34) sperrt und den Abgasauslass (33) öffnet,
- **dass** die Frischluftventileinrichtung (27) als 3/2-Wegeventil ausgestaltet ist, das in der ersten Stellung einen mit der Frischluftleitung (7) verbundenen Frischlufteinlass (37) reduziert oder sperrt und einen mit der Rückführleitung (11) verbundenen Rückführeinlass (36) öffnet und das in der zweiten Stellung den Frischlufteinlass (37) öffnet und den Rückführeinlass (36) sperrt.

2. Brennkraftmaschinensystem nach Anspruch 1,
**dadurch gekennzeichnet,**
**dass** zumindest eine der Ventileinrichtungen (26, 27) als Schaltventil ausgestaltet ist, dessen Ventilglied (30, 31, 35, 39) zwischen die erste Stellung und die zweite Stellung bildenden Endstellungen schaltbar ist.

3. Brennkraftmaschinensystem nach Anspruch 1 oder 2,
**dadurch gekennzeichnet,**
**dass** zumindest eine der Ventileinrichtungen (26, 27) als Rotationsventil ausgestaltet ist, dessen Ventilglied (30, 31, 35, 39) die erste Stellung bildende Schließphasen und die zweite Stellung bildende Offenphasen durchläuft.

4. Verfahren zum Betreiben eines Brennkraftmaschinensystems (1), insbesondere in einem Kraftfahrzeug,
- wobei das Brennkraftmaschinensystem (1) eine Brennkraftmaschine (2), eine Frischluftanlage (4) zum Zuführen von Frischluft zur Brennkraftmaschine (2), eine Abgasanlage (5) zum Abführen von Abgas von der Brennkraftmaschine (2) und eine Abgasrückführanlage (6) zum Rückführen von Abgas von der Abgasanlage (5) zur Frischluftanlage (4) aufweist,
- bei dem im Bereich einer Entnahmestelle (12), über die eine Rückführleitung (11) der Abgasrückführanlage (6) an eine Abgasleitung (9) der Abgasanlage (5) angeschlossen ist, mittels einer Abgasventileinrichtung (26) Druckpulsationen im Abgas erzeugt werden, bei denen positive Druckpulse aufeinanderfolgen, die einen gegenüber einem Ausgangsabgasdruck erhöhten Druck aufweisen,
- bei dem im Bereich einer Einleitstelle (13), über die die Rückführleitung (11) an eine Frischluftleitung (7) der Frischluftanlage (4) angeschlossen ist, mittels einer Frischluftventileinrichtung (27) Druckpulsationen in der Frischluft erzeugt werden, bei denen negative Druckpulse aufeinanderfolgen, die einen gegenüber einem Ausgangsfrischluftdruck reduzierten Druck aufweisen,
**dadurch gekennzeichnet,**
- **dass** die Druckpulsationen so aufeinander abgestimmt werden, dass im Bereich der Einleitstelle (13) die positiven Druckpulse auf die negativen Druckpulse treffen,
- **dass** die positiven Druckpulse durch abwechselndes Umleiten zumindest eines Teils der Abgasströmung von der Abgasleitung (9) in die Rückführleitung (11) erzeugt werden,
- **dass** die negativen Druckpulse durch vorübergehendes Ersetzen zumindest eines Teils der Frischluftströmung in der Frischluftleitung (7) durch rückgeführtes Abgas erzeugt werden.

5. Verfahren nach Anspruch 4,
**dadurch gekennzeichnet,**
**dass** die Synchronisationsfrequenz unabhängig von der Motordrehzahl so ausgewält wird, dass Druckschwingungen in der Abgasrückführleitung angeregt werden.

6. Verfahren nach Anspruch 4 oder 5,
**dadurch gekennzeichnet,**
**dass** zumindest eine der Ventileinrichtungen (26, 27) im Stillstand und/oder bei Deaktivierung der Ventileinrichtung (26, 27) die AGR-Leitung (11) verschließt, um bedarfsabhängig eine Rückführung von Abgas zu verhindern.

## Claims

1. An internal combustion engine system, in particular of a motor vehicle,
- with an internal combustion engine (2),
- with a fresh air system (4) for supplying fresh air to the internal combustion engine (2),
- with an exhaust gas system (5) for discharging exhaust gas from the internal combustion engine (2),
- with an exhaust gas recirculation system (6) for recirculating exhaust gas from the exhaust gas system (5) to the fresh air system (4),
- wherein the exhaust gas recirculation system (6) has an exhaust gas valve assembly (26) by means of which a removal flow can be controlled which enters at a removal point (12) from an exhaust gas line (9) of the exhaust gas system (5) into a recirculation line (11) of the exhaust gas recirculation system (6),
- wherein the exhaust gas recirculation system (6) has a fresh air valve assembly (27) by means of which an introduction flow can be controlled which enters at an introduction point (13) from the recirculation line (11) into a fresh air line (7) of the fresh air system (4),
- wherein for generating the removal flow, the exhaust gas valve assembly (26) is permanently displaceable between a first position which increases the pressure in the exhaust gas line (9) at the removal point (12) with respect to an initial exhaust gas pressure and a second position which decreases the pressure in the exhaust gas line (9) at the removal point (12) to the initial exhaust gas pressure so that positive pressure pulses with a pressure which is increased with respect to the initial exhaust gas pressure follow each other,
- wherein for generating the introduction flow, the fresh air valve assembly (27) is permanently displaceable between a first position which decreases the pressure in the fresh air line (7) at the introduction point (13) with respect to an initial fresh air pressure and a second position which increases the pressure in the fresh air line (7) at the introduction point (13) to the initial fresh air pressure so that negative pressure pulses with a pressure which is decreased with respect to the initial fresh air pressure follow each other,
**characterized in**
- **that** the valve assemblies (26, 27) are synchronized in such a manner that the positive pressure pulses entering at the removal point (12) into the recirculation line (11) meet the negative pressure pulses at the introduction point (13),
- **that** the exhaust gas valve assembly (26) is configured as 3/2 directional control valve which, in the first position, opens a recirculation outlet (34) connected to the recirculation line (11) and reduces or blocks an exhaust gas outlet (33) connected to the exhaust gas line (9) and which, in the second position, blocks the recirculation outlet (34) and opens the exhaust gas outlet (33),
- **that** the fresh air valve assembly (27) is configured as 3/2 directional control valve which, in the first position, reduces or blocks a fresh air inlet (37) connected to the fresh air line (7) and opens a recirculation inlet (36) connected to the recirculation line (11) and which, in the second position, opens the fresh air inlet (37) and blocks the recirculation inlet (36).

2. The internal combustion engine system according to claim 1,
**characterized in**
**that** at least one of the valve assemblies (26, 27) is configured as switching valve, the valve member (30, 31, 35, 39) of which can be switched between end positions which form the first position and the second position.

3. The internal combustion engine system according to claim 1 or 2,
**characterized in**
**that** at least one of the valve assemblies (26, 27) is configured as rotary valve, the valve member (30, 31, 35, 39) of which runs through closing phases forming the first position and opening phases forming the second position.

4. A method for operating an internal combustion engine system (1), in particular in a motor vehicle,
- wherein the internal combustion engine system (1) has an internal combustion engine (2), a fresh air system (4) for supplying fresh air to the internal combustion engine (2), an exhaust gas system (5) for discharging exhaust gas from the internal combustion engine (2) and an exhaust gas recirculation system (6) for recirculating exhaust gas from the exhaust gas system (5) to the fresh air system (4),
- in which in the region of a removal point (12), via which a recirculation line (11) of the exhaust gas recirculation system (6) is connected to an exhaust gas line (9) of the exhaust gas system (5), pressure pulsations are generated in the exhaust gas by means of an exhaust gas valve assembly (26), wherein during said pressure pulsations, positive pressure pulses follow each other which have an increased pressure with respect to an initial exhaust gas pressure,
- in which in the region of an introduction point (13), via which the recirculation line (11) is connected to a fresh air line (7) of the fresh air system (4), pressure pulsations are generated in the fresh air by means of a fresh air valve assembly (27), wherein during said pressure pulsations, negative pressure pulses follow each other which have a reduced pressure with respect to an initial fresh air pressure,
**characterized in**
- **that** the pressure pulsations are adapted to each other in such a manner that the positive pressure pulses meet the negative pressure pulses in the region of the introduction point (13),
- **that** the positive pressure pulses are generated by alternatingly redirecting at least a portion of the exhaust gas flow from the exhaust gas line (9) into the recirculation line (11),
- **that** the negative pressure pulses are generated by temporarily replacing at least a portion of the fresh air flow in the fresh air line (7) with recirculated exhaust gas.

5. The method according to claim 4,
**characterized in**
**that** the synchronization frequency is selected independently of the engine speed such that pressure vibrations are excited in the exhaust gas recirculation line.

6. The method according to claim 4 or 5,
**characterized in**
**that** at least one of the valve assemblies (26, 27) closes the EGR line (11) at standstill and/or deactivation of the valve assembly (26, 27) in order to prevent a recirculation of exhaust gas, if required.

## Revendications

1. Système de moteur à combustion interne, notamment d'un véhicule automobile,
- comportant un moteur à combustion interne (2),
- comportant une installation d'air frais (4) pour alimenter de l'air frais dans le moteur à combustion interne (2),
- comportant une installation de gaz d'échappement (5) pour évacuer du gaz d'échappement du moteur à combustion interne (2),
- comportant une installation de réintroduction de gaz d'échappement (6) pour réintroduire du gaz d'échappement à partir de l'installation de gaz d'échappement (5) dans l'installation d'air frais (4),
- dans lequel l'installation de réintroduction de gaz d'échappement (6) présente un dispositif de soupape de gaz d'échappement (26), avec lequel un courant de prélèvement entrant depuis une conduite de gaz d'échappement (9) de l'installation de gaz d'échappement (5) à un point de prélèvement (21) dans une conduite de réintroduction (11) de l'installation de réintroduction de gaz d'échappement (6) peut être commandé,
- dans lequel l'installation de réintroduction de gaz d'échappement (6) présente un dispositif de soupape d'air frais (27), avec lequel un courant d'introduction entrant depuis la conduite de réintroduction (1) à un point d'introduction (13) dans une conduite d'air frais (7) de l'installation d'air frais (4) peut être commandé,
- dans lequel le dispositif de soupape de gaz d'échappement (26) pour produire le courant de prélèvement est réglable en permanence entre une première position augmentant la pression dans la conduite de gaz d'échappement (9) au point de prélèvement (12) par rapport à une pression de gaz d'échappement de sortie et une deuxième position diminuant la pression dans la conduite de gaz d'échappement (9) au point de prélèvement (12) à la pression de gaz d'échappement e sortie, de telle sorte que des impulsions de pression positives avec une pression accru par rapport çà la pression de gaz d'échappement de sortie se succèdent,
- dans lequel le dispositif de soupape d'air frais (27) pour produire le courant d'introduction est réglable en permanence entre une première position diminuant la pression dans la conduite d'air frais (7) au point d'introduction (13) par rapport à une pression d'air frais de sortie et une deuxième position augmentant la pression dans la conduite d'air frais (7) au point d'introduction à la pression d'air frais de sortie, de telle sorte que des impulsions de pression négatives se succèdent avec une pression réduite par rapport à la pression d'air frais de sortie,
**caractérisé en ce que**
- les dispositifs de soupape (26, 27) sont synchronisés de telle sorte que les impulsions de pression positives se produisant au point de prélèvement (12) dans la conduite de réintroduction (11) agissent sur les impulsions de pression négatives au point d'introduction (13),
- le dispositif de soupape de gaz d'échappement (26) est conçu comme une vanne à 3/2 voies, qui dans la première position ouvre un échappement de réintroduction (34) relié à la conduite de réintroduction (11) et réduit ou bloque un deuxième échappement de gaz d'échappement (33) relié à la conduite de gaz d'échappement (9) et qui dans la deuxième position bloque l'échappement de réintroduction (34) et ouvre l'échappement de gaz d'échappement (33),
- le dispositif de soupape d'air frais (27) est conçu comme une vanne à 3/2 voies, qui dans la première position réduit ou bloque une admission d'air frais (37) reliée à la conduite d'air frais (7) et ouvre une admission de réintroduction (36) reliée à la conduite de réintroduction (11) et qui dans la deuxième position ouvre l'admission d'air frais (37) et bloque l'admission de réintroduction (36).

2. Système de moteur à combustion interne selon la revendication 1, **caractérisé en ce que** au moins un des dispositifs de soupape (26, 27) est conçu comme une soupape de commutation, dont l'organe de soupape (30, 31, 35, 39) peut être commuté entre les positions finales formant la première position et la deuxième position.

3. Système de moteur à combustion interne selon la revendication 1 ou 2, **caractérisé en ce que** au moins un des dispositifs de soupape (26, 27) est conçu comme une soupape de rotation, dont l'organe de soupape (30, 31, 35, 39) passe par des phases de fermeture formant la première position et des phases d'ouverture formant la deuxième position.

4. Procédé d'exploitation d'un système de moteur à combustion interne (1), notamment dans un véhicule automobile,
- dans lequel le système de moteur à combustion interne (1) présente un moteur à combustion interne (2), une installation de gaz frais (4) pour alimenter de l'air frais dans le moteur à combustion interne (2), une installation de gaz d'échappement (5) pour évacuer du gaz d'échappement hors du moteur à combustion interne (2) et une installation de réintroduction de gaz d'échappement (6 )pour réintroduire du gaz d'échappement depuis l'installation de gaz d'échappement (5) dans l'installation d'air frais (4),
- dans lequel au niveau d'un point de prélèvement (12), par l'intermédiaire duquel une conduite de réintroduction (11) de l'installation de réintroduction de gaz d'échappement (6) est raccordée à une conduite de gaz d'échappement (9) de l'installation de gaz d'échappement (5), au moyen d'un dispositif de soupape de gaz d'échappement (26) des pulsations de pression sont produites dans le gaz d'échappement, dans lesquelles des impulsions de pression positives se succèdent, qui présentent une pression accrue par rapport à une pression de gaz d'échappement de sortie,
- dans lequel au niveau d'un point d'introduction (13), par l'intermédiaire duquel la conduite de réintroduction (11) est raccordée à une conduite d'air frais (7) de l'installation d'air frais (4), au moyen d'un dispositif de soupape d'air frais (27) de pulsations de pression sont produites dans l'air frais, dans lesquelles des impulsions de pression négatives se succèdent, qui présentent une pression réduite par rapport à une pression d'air frais de sortie,
**caractérisé en ce que**
- les pulsations de pression sont harmonisées les unes aux autres de telle sorte qu'au niveau du point d'introduction (13) les impulsions de pression positives agissent sur les impulsions de pression négatives,
- les impulsions de pression positives sont produites par une déviation en alternance d'au moins une partie de l'écoulement de gaz d'échappement par la conduite de gaz d'échappement (9) dans la conduite de réintroduction (11),
- les impulsions de pression négatives sont produites par remplacement temporaire d'au moins une partie de l'écoulement d'air frais dans la conduite d'air frais (7) par du gaz d'échappement réintroduit.

5. Procédé selon la revendication 4, **caractérisé en ce que** la fréquence de synchronisation est sélectionnée indépendamment de la vitesse de rotation du moteur, de telle sorte que des oscillations de pression soient excitées dans la conduite de réintroduction de gaz d'échappement.

6. Procédé selon la revendication 4 ou 5, **caractérisé en ce que** au moins un des dispositifs de soupape (26, 27) à l'arrêt et/ou en cas de désactivation du dispositif de soupape (26, 27) obture la conduite de réintroduction de gaz d'échappement (11), afin d'empêcher en fonction des besoins une réintroduction du gaz d'échappement.
